# EUROPEAN PATENT SPECIFICATION

(11) **EP 4 223 487 B1**
(45) Date of publication and mention of the grant of the patent: **28.01.2026**
(21) Application number: 22155439.7
(22) Date of filing: 07.02.2022
(51) Int. Cl.: B29C 64/364, B29C 64/25, B29C 64/118, B33Y 10/00, B33Y 30/00, B22F 10/32, B22F 10/20, B22F 10/85, B22F 12/13, B22F 12/90

(54) **PRINTING ARRANGEMENT AND METHOD OF PRINTING OBJECTS**
DRUCKANORDNUNG UND VERFAHREN ZUM DRUCKEN VON OBJEKTEN
AGENCEMENT D'IMPRESSION ET PROCÉDÉ D'IMPRESSION D'OBJETS

(43) Date of publication of application: 09.08.2023
(73) Proprietor: Rapid Dimension AB, 331 53 Värnamo (SE)
(72) Inventor: Bengtsson, Eric, 514 62 Ölsremma (SE)
(74) Representative: AWA Sweden AB

(56) References cited:
- US-A1- 2015 132 425
- US-B2- 11 198 250

## Description

### Technical Field

The present disclosure relates to a printing arrangement for printing objects and in particular a printing arrangement comprising means for controlling environmental parameters in a printing chamber to improve printing quality. A method of printing objects is also disclosed.

### Background

3D printing, also known as additive manufacturing, allows for printing objects in a desired shape. There are many different 3D printing processes, some examples include vat photopolymerization, inkjet technology and material extrusion. One common characteristic to various 3D printing processes is that an object is created or "printed" layer-by-layer. Typically, this results in the presence of a distinct interface between adjacent layers which introduces structural weakness into the printed object. It is desirable to reduce or prevent the forming of distinct interfaces between adjacent layers. However, solutions available today are typically complicated and ill-suited for large-scale production of printed products. Thus, there is a need for an improved solution that enables both printing of high-quality products and large-scale production.

The document US 2015/132425 A1 teaches a 3D printer integrated with or enclosed in a controlled chamber. This chamber could be integrated with an existing 3D printer to enclose the print area or it could be larger to enclose the entire printer or the entire mobile print station, which would readily be deployed inside a container, such as a shipping container. The chamber controls and regulates temperature, humidity, and Barometric pressure to ensure that printing is done in a controlled atmosphere. The 3D printing process is very sensitive to temperature, humidity, and Barometric pressure as the ink must be highly controlled to a specific melting point for proper printing and adhesion between layers.

### Summary

It is an object of the present invention to provide an improved solution that alleviates at least some of the mentioned drawbacks with present solutions. In particular, a first object of the invention is to provide a printing arrangement which enables printing of objects of improved quality. This object is solved by the invention according to claim 1. A second object of the invention is to provide a printing arrangement which enables large scale production. This object is also solved by the invention according to claim 1. A third object of the invention is to provide a manufacturing method that enables printing of objects of improved quality and/or enables large scale production. This object is solved by the method according to claim 10. The dependent claims define preferred embodiments.

The inventors have identified that moisture in filaments impacts the porosity and by consequence filament strength, both along longitudinal direction and along transverse direction of a filament. The inventors have also identified that moisture in the printing environment can be captured in-between layers of an object during printing, which may for similar reasons negatively impact the structure quality of the object as a whole. The latter is solved by the inventive concept of actively controlling the humidity in a printing chamber to a dry environment.

By humidity, it may be meant relative humidity, which may be defined as the ratio of the amount of water vapor in the air to the amount of water vapor the air could potentially contain at a given temperature and pressure. The relative humidity may be expressed as a percentage. All humidity values herein disclosed may be expressed as a percentage wherein said given temperature and pressure are room temperature and atmospheric pressure respectively unless otherwise specified. By room temperature, it may be meant 23 °C.

According to a first aspect of the invention, a printing arrangement for printing objects is provided. The printing arrangement comprises: a printing chamber adapted to provide, during use, a hermetically sealed environment; a first temperature sensor adapted to measure a temperature of a filament from a filament source; heating means for heating the filament to a target filament temperature; a printing head adapted to deposit, during use, the heated filament into the printing chamber in accordance with a 3D object model stored in a memory module. The printing arrangement further comprises: a first humidity sensor adapted to measure the humidity in the printing chamber, and first humidity adjustment means adapted to adjust humidity in the printing chamber to a target printing chamber humidity.

The first humidity adjustment means and first humidity sensor enables humidity in the printing chamber to be controlled to a target humidity. The target humidity in the printing chamber may be selected such that the environment of the printing chamber is a dry environment. By dry environment, it may be meant a humidity of 0% - 20 %, preferably 0% - 10%, most preferable 0% - 5%.

By printing objects in an actively controlled dry environment, the amount of moisture captured in-between layers of an object during printing may be reduced. This may improve upon an overall quality of the object, thereby solving the first object of the invention. Further, the first humidity adjustment means and first humidity sensor enables greater control of the 3D printing which may translate to a more homogenous result across different printing arrangements implementing the invention. Thus, the invention is suitable for large scale production where small quality variation between produced objects is desired, thereby solving the second object of the invention.

An advantage of the printing arrangement is that objects printed by it may be characterized in a lower variance of tensile strength as compared to printing arrangements without actively controlled printing chamber humidity. In particular, when the humidity in the printing chamber was actively controlled to be kept within 0%-5%, objects printed could be characterized by a variance in tensile strength of about 1%, whereas without actively controlled printing chamber humidity, the corresponding value of objects printed was about 4%. A further advantage is that the objects printed by the printing arrangement exhibits an increased absolute tensile strength as compared to absolute strength of objects printed by conventional printing arrangements. Objects printed by the printing arrangement may exhibit an increase of 30% to 40% of absolute tensile strength depending on elongation as compared to absolute tensile strength of objects printed by conventional printing arrangements. For example, when the elongation is about 1 mm, the absolute tensile strength of objects printed by the printed by the present invention may be about 1000 N; when the elongation is about 2 mm, the absolute tensile strength may be 1550 N, and when the elongation is about 3 mm, the absolute tensile strength may be about 1760 N.

The printing chamber may be adapted to be changeable between an open state and a closed state. In the closed state, the printing chamber may define a hermetically sealed environment. By the hermetically sealed environment during use, the printing chamber facilitates humidity to be kept at a target level since it limits and/or prevents gases such as water vapor to enter the printing chamber from the exterior in an uncontrolled manner.

The hermetic sealing may be enabled by providing a hermetic seal arranged to seal any gaps between parts defining the shape of the printing chamber. Hermetic seals may include epoxy hermetic seals, glass-to-metal hermetic seals, and/or ceramic-to-metal hermetic seals. The printing chamber may have one or more openable elements, such as hatches or the like, that can be opened and closed to allow access into the printing chamber and to allow it to be hermetically sealed. Alternatively, or in combination, the printing chamber may comprise a removable casing to allow access into the printing chamber and to allow it to be hermetically sealed.

The printing arrangement may further comprise supporting means adapted to provide a supporting area wherein objects are printed. The supporting means may comprise a platform, preferably a platform adapted to be moveable. The platform may be adapted to move within the printing chamber by translational motion or rotational motion. By either of, or by a combination of, these motions, the platform may be moved in a predetermined manner so that filament is deposited from the printing head to form the object in accordance with the 3D object model stored in the memory module.

Alternatively, or in combination, the printing head is adapted to move within the printing chamber by translational motion or rotational motion, in a predetermined manner so that filaments are deposited to form the object in accordance with the 3D object model stored in the memory module.

The filament source may be a plastic such as: polylactic acid, PLA; acrylonitrile butadiene styrene, ABS; polyvinyl alcohol plastic, PVA, polycarbonate, PC. The filament source may be a resin, a metal, carbon fiber, etc.

The heating supplied by the first heating means may be based on one or more parameters, such as a target temperature characteristic to the filament material used, supply rate, etc. The first temperature sensor may be adapted to measure a temperature of the filament after it has been heated. The first heating means may be adapted to heat the filament material accordingly so that a difference between a measured filament temperature and a target filament temperature is reduced. The first heating means may provide heating at two heating locations, wherein a filament is heated in a predetermined manner at the first heating location after which a filament temperature is measured and the filament is then heated accordingly at the second heating location to reach the target filament temperature. The heating required may be deduced from the filament material used and the temperature difference between the measured filament temperature and the target filament temperature.

The first heating means may be a heating element, a heating cartridge, or the like.

The printing arrangement may comprise an extruder comprising the printing head and the first heating means. The extrude may be adapted to draw in filament, melt the filament, and push out the filament. The extruder may comprise a cold end and an hot end - the cold end may comprise a motor for drawing the filament into and through the extruder, whereas the hot end is adapted to melt the filament as it is being pushed through the extruder. The extruder may comprise a motor, a heat sink, a heat block, thermistor, and/or a nozzle. The extruder may further comprise a hobbed gear and an idler gear which are adapted to work together for drawing and pushing the filament through the extruder. The idler gear may be adjustable in terms of position so that the distance between the idler gear and the hobbed gear may be varied to a preferred distance. This allows for varying the tension provided.

The printing arrangement may comprise control means adapted to receive input from one or more sensors and control an associated element based on target data and sensor data. The instructions may be pre-programmed or received via a user interface.

The control means may be adapted to control the printing chamber to open or close in accordance with instructions. The control means may control the supply of filament from the filament source in accordance with instructions. The supply of filament may be defined by a supply rate, i.e. a length or volume of filament supplied per unit time. The filament source may be a filament winding attached to rotating means which when rotated allows the filament to unwind from the filament winding and be supplied at the preferred supply rate to the printing head. The supply rate may be variable depending on other parameters, such as object to be printed, filament material, target filament temperature, target printing chamber humidity etc. The control means may be adapted to control the supply rate based on these parameters.

The control means may be adapted to control the heating provided by the first heating means based on the measured filament temperature so that the filament reaches the target filament temperature.

The control means may be adapted to control the position and/or orientation of the printing head during printing. The control means may be adapted to control the position and/or orientation of the platform of the supporting means.

The control means may be adapted to control the printing arrangement so that the printing arrangement prints an object in accordance with the 3D object model stored in a memory module. The printing arrangement may comprise the memory module. The printing arrangement may comprise means to communicatively relay information regarding the 3D object model stored in the memory module to the control means which determines a printing process and controls the printing arrangement in accordance with said printing process.

The control means may be adapted to control the first humidity adjustment means based on humidity measurement of the first humidity sensor to the target printing chamber humidity.

According to one embodiment, the printing arrangement further comprises: a second temperature sensor adapted to measure a temperature of the printing chamber, and second heating means adapted to heat the printing chamber to a target printing chamber temperature. By heating the printing chamber to a target printing chamber, it may consequently keep deposited filament within the printing chamber kept at a preferred temperature. Thus, a temperature difference between the temperature of deposited filament and the temperature of heated filament to be deposited may be reduced. This may improve and/or facilitate bonding of consecutive layers, which further improves quality of the 3D object.

The second heating means may be adapted for heating the printing chamber from a first temperature to a second temperature. The first and second temperature depends on the volume of the printing chamber. The heating means may be adapted to be able to heat the printing chamber from an ambient temperature up to 100 °C. By room temperature, it may be meant 23 °C.

Alternatively, or in combination, the printing arrangement may comprise spot heating means which allows spot heating of the structure being printed in the printing chamber. Spot heating means may for instance be a light emitting device configured to emit light, or laser, with an intensity, at a location where heated filament is to be deposited. The second temperature sensor may be adapted to measure spot temperature and/or general temperature within the printing chamber.

The second heating means may be adapted to heat the supporting means, wherein the heat from said supporting means spreads and heats the printing chamber as a whole.

The printing chamber may be heat insulated. By this, the printing chamber may more easily keep a target printing chamber temperature.

According to one embodiment, the printing arrangement further comprises: a filament chamber for housing the filament source. The filament chamber may be adapted to provide, when in a closed state, a hermetically sealed environment. By this, the filament source may be stored therein for a longer period of time without deteriorating due to moisture.

According to one embodiment, the printing arrangement further comprises: a second humidity sensor adapted to measure the humidity in the filament chamber, and second humidity adjustment means adapted to control humidity in the filament chamber to a target filament chamber humidity. Thus, the environment of the filament chamber may be controlled to be a dry environment, which then limits the porosity of the filament when being stored therein prior to use.

According to one embodiment, the first and second humidity adjustment means are the same. The first and second humidity adjustment means may be a common humidity adjustment means. The humidity adjustment means may be adapted to circulate air through the printing chamber and the filament chamber and collect moisture of the air, thereby reducing the humidity.

According to one embodiment, the first and/or second humidity adjustment means is a dehumidifier. The dehumidifier may comprise a dehumidifier unit provided with an inlet section and an outlet section and a corresponding piping system fluidly connecting the printing chamber and the filament chamber to the respective inlet section and outlet section of the dehumidifier unit. The dehumidifier unit may be adapted to collect moisture in the air entering the dehumidifier unit from the inlet section. Dried air may then be released from the dehumidification via the outlet section by which the dried air may return to the printing chamber and/or the filament chamber.

According to one embodiment, the printing arrangement further comprises: a pressure sensor adapted to measure the pressure in the printing chamber, and pressure control means adapted to control the pressure in the printing chamber to a target printing chamber pressure. By this, pressure may be controlled to a desired level. By controlling the pressure, the printing arrangement may maintain a desired target quality of 3D object despite small variations in pressure due to weather. Moreover, the printing arrangement may maintain a desired target quality of 3D objects regardless of altitude.

According to a second aspect of the invention, a method for printing an object is provided. The method comprises the steps of: receiving, in memory module, a 3D model of said object; providing a printing chamber that, during use, is hermetically sealed; measuring, by means of a first temperature sensor, a temperature of a filament from a filament source; heating, by means of a first heating means, the filament to a target filament temperature; depositing, by means of a printing head, the filament heated to the target temperature into the printing chamber in accordance with said 3D model. The method further comprises the steps of: measuring, by means of a first humidity sensor, the humidity in the printing chamber, and controlling, by means of a first humidity adjustment means, the humidity in the printing chamber to a target printing chamber humidity, wherein the target printing chamber humidity is 0% - 15%.

By this, a manufacturing method is provided that enables printing of objects of improved quality and/or enables large scale production, thereby solving the third object of the invention.

An advantage of the method is that objects printed by it may be characterized in a lower variance of tensile strength as compared to methods not implementing actively controlled printing chamber humidity. In particular, when the humidity in the printing chamber was actively controlled to be kept within 0%-15%, objects printed therein could be characterized by a variance in tensile strength of about 1%, whereas without actively controlled printing chamber humidity, the corresponding value of objects printed was about 4%. A further advantage is that the objects printed by the printing arrangement exhibits an increased absolute tensile strength as compared to absolute strength of objects printed by conventional printing arrangements. Objects printed by the printing arrangement may exhibit an increase of 30% to 40% of absolute tensile strength depending on elongation as compared to absolute tensile strength of objects printed by conventional printing arrangements. For example, when the elongation is about 1 mm, the absolute tensile strength of objects printed by the printed by the present invention may be about 900 N; when the elongation is about 2 mm, the absolute tensile strength may be 1500 N, and when the elongation is about 3 mm, the absolute tensile strength may be about 1750 N.

The first humidity adjustment means and first humidity sensor enables humidity in the printing chamber to be controlled to a target humidity. The target humidity in the printing chamber may be selected such that the environment of the printing chamber is a dry environment. By dry environment, it may be meant a humidity of 0% - 20 %, preferably 0% - 10%, most preferable 0% - 5%. By printing objects in an actively controlled dry environment, the amount of moisture captured in-between layers of an object during printing may be reduced. This may improve upon an overall quality of the object, thereby solving the first object of the invention. Further, the first humidity adjustment means and first humidity sensor enables greater control of the 3D printing which may translate to a more homogenous result across different printing arrangements printing according to the method. Thus, the method is suitable for large scale production where small quality variation between produced objects is desired, thereby solving the second object of the invention.

The printing chamber used in the method may be adapted to be changed between an open state and a closed state. In the closed state, the printing chamber may define a hermetically sealed environment. The hermetic sealing may be enabled by providing a hermetic seal arranged to seal any gaps between parts defining the shape of the printing chamber. Hermetic seals may include epoxy hermetic seals, glass-to-metal hermetic seals, and/or ceramic-to-metal hermetic seals. The printing chamber may have one or more hatches or the like that can be opened and closed to allow access into the printing chamber and to allow it to be hermetically sealed. Alternatively, or in combination, the printing chamber may comprise a casing adapted to be reversibly removable to allow access into the printing chamber and to allow it to be hermetically sealed.

The printing arrangement used in the method may further comprise supporting means adapted to provide a supporting area wherein objects are printed. The supporting means may comprise a platform, preferably a platform adapted to be moveable. The platform may be adapted to move within the printing chamber by translational motion or rotational motion. By either or by a combination of these motions, the platform may be moved in a predetermined manner so that filament is deposited from the printing head to form the object in accordance with the 3D object model stored in the memory module.

Alternatively, or in combination, the printing head used in the method is adapted to move within the printing chamber by translational motion or rotational motion, in a predetermined manner so that filaments are deposited to form the object in accordance with the 3D object model stored in the memory module.

The filament source may be a plastic such as: polylactic acid, PLA; acrylonitrile butadiene styrene, ABS; polyvinyl alcohol plastic, PVA, polycarbonate, PC. The filament source may be a resin, a metal, carbon fiber, etc.

The heating supplied by the first heating means may be based on one or more parameters, such as a target temperature characteristic to the filament material used, supply rate, etc. The first temperature sensor may be adapted to measure a temperature of the filament after it has been heated. The first heating means may heat accordingly so that a difference between a measured filament temperature and a target filament temperature. The first heating means may provide two heating locations, wherein a filament is heated in a predetermined manner at the first heating location after which a filament temperature is measured and the filament is then heated accordingly at the second heating location to reach the target filament temperature. The heating required may be deduced from the filament material used and the temperature difference between the measured filament temperature and the target filament temperature.

The printing arrangement used in the method may comprise control means adapted to receive input from one or more sensors and control an associated element based on target data and sensor data. The instructions may be pre-programmed or received via a user interface.

The control means may be adapted to control the printing chamber to open or close in accordance with instructions. The control means may control the supply of filament from the filament source in accordance with instructions. The supply of filament may be defined by a supply rate, i.e. a length or volume of filament supplied per unit time. The filament source may be a filament winding attached to rotating means which when rotated allows the filament to unwind from the filament winding and be supplied at the preferred supply rate to the printing head. The supply rate may be variable depending on other parameters, such as object to be printed, filament material, target filament temperature, target printing chamber humidity etc. The control means may be adapted to control the supply rate based on these parameters.

The control means may be adapted to control the heating provided by the first heating means based on the measured filament temperature so that the filament reaches the target filament temperature.

The control means may be adapted to control the position and/or orientation of the printing head during printing. The control means may be adapted to control the position and/or orientation of the platform of the supporting means.

The control means may be adapted to control the printing arrangement so that the printing arrangement prints an object in accordance with the 3D object model stored in a memory module. The printing arrangement may comprise the memory module. The printing arrangement may comprise means to communicatively relay information regarding the 3D object model stored in the memory module to the control means which determines a printing process and controls the printing arrangement in accordance with said printing process.

The control means may be adapted to control the first humidity adjustment means based on humidity measurement of the first humidity sensor to the target printing chamber humidity.

According to one embodiment, the method further comprises the steps of: measuring, by means of a second temperature sensor, a temperature of the printing chamber, and heating, by means of heating means, the printing chamber to a target printing chamber temperature. By heating the printing chamber to a target printing chamber temperature, it may consequently keep deposited filament within the printing chamber warm. Thus, a temperature difference between deposited filament and heated filament to be deposited may be reduced. This improves bonding of consecutive layers, which further improves quality of the 3D object.

Alternatively, or in combination, the method may comprise a step of spot heating, by means of spot heating means, of the structure being printed in the printing chamber. Spot heating means may for instance be a light emitting device configured to emit light, or laser, with an intensity, at a location where heated filament is to be deposited. The second temperature sensor may be adapted to measure spot temperature and/or general temperature within the printing chamber.

According to one embodiment, the method further comprises the steps of: measuring, by means of a second humidity sensor, the humidity in the filament chamber, and controlling, by means of a second humidity adjustment means, the humidity in the filament chamber to a target filament chamber humidity. By this, the filament may be kept in a dry environment, thereby prolonging their longevity and also ensure satisfactory quality of objects printed.

According to one embodiment, the method further comprises the first and second humidity adjustment means are the same. The first and second humidity adjustment means may be a common humidity adjustment means. The humidity adjustment means may be adapted to circulate air through the printing chamber and the filament chamber and collect moisture of the air, thereby reducing the humidity.

According to one embodiment, the first and/ or second humidity adjustment means is a dehumidifier. The dehumidifier may comprise a dehumidifier unit provided with an inlet section and an outlet section and a corresponding piping system fluidly connecting the printing chamber and the filament chamber to the respective inlet section and outlet section of the dehumidifier unit. The dehumidifier unit may be adapted to collect moisture in the air entering the dehumidifier unit from the inlet section. Dried air may then be released from the dehumidification via the outlet section by which the dried air may return to the printing chamber and/or the filament chamber.

According to one embodiment, the method further comprises the steps of: measuring, by means of a pressure sensor, the pressure in the printing chamber, and controlling the pressure in the printing chamber to a target printing chamber pressure. By this, pressure may be controlled to a desired level. By controlling the pressure, the printing arrangement may maintain a desired target quality of 3D object despite small variations in pressure due to weather. Moreover, the printing arrangement may maintain a desired target quality of 3D objects regardless of altitude.

According to one embodiment, the method comprises the step of using a printing arrangement according to the first aspect or any embodiments thereof during printing.

According to one embodiment, the target printing chamber humidity is 0% - 15%. The target printing chamber humidity is 0% - 1%, 1% - 2%, 2% - 3%, 3% - 4%, 4% - 5%, 5% - 6%, 6% - 7%, 7% - 8%, 8% - 9%, 9% - 10%, 10% - 11%, 11% - 12%, 12% - 13%, 13% - 14%, or 14% - 15%. By this, porosity of printed objects may be reduced. Moreover, distinct interfaces between adjacent layers of a printed object may be greatly reduced.

The invention is defined by the appended independent claims, with embodiments being set forth in the appended dependent claims, in the following description and in the drawings.

### Brief Description of the Drawings

The invention will in the following be described in more detail with reference to the enclosed drawings, wherein:
Fig. 1 shows a perspective view of the printing arrangement according to one embodiment of the invention;
Figs. 2a-2c show various views of the printing arrangement according to one embodiment of the invention;
Fig. 3 shows an illustration of the printing chamber of the printing arrangement according to one embodiment of the invention;
Fig. 4 shows an illustration of the steps of the method according to one embodiment of the invention;
Fig. 5 illustrates a graph representing absolute tensile strength measurements of objects printed by the present invention and of objects printed by a conventional solution.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

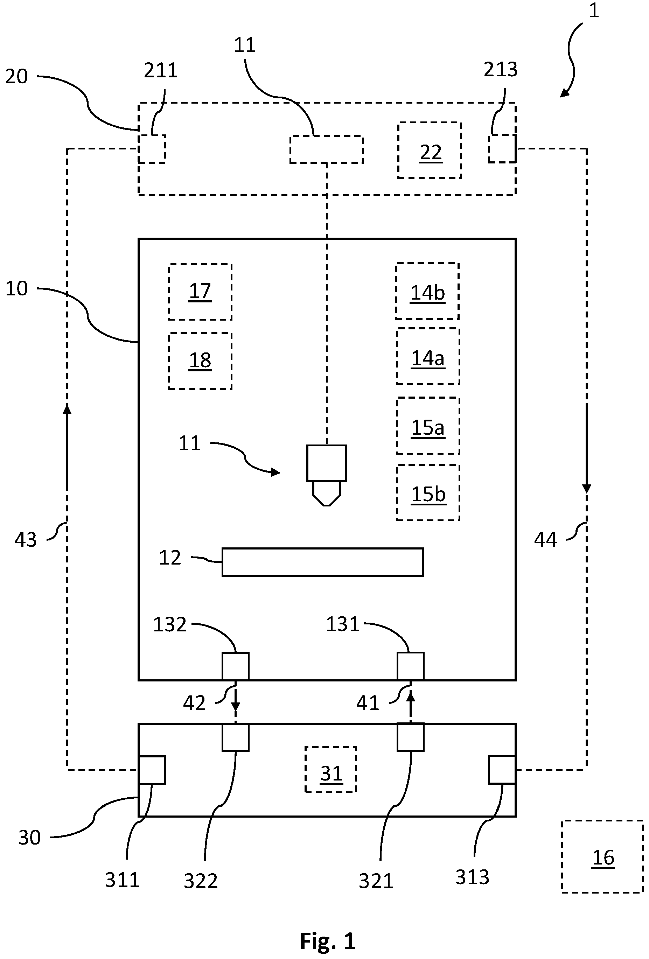

Fig. 1 shows a schematic view of the printing arrangement 1 according to one embodiment of the invention. The printing arrangement 1 comprises a printing chamber 10 adapted to provide, during use, a hermetically sealed environment. The printing arrangement 1 further comprises a first temperature sensor 14a adapted to measure a temperature of a filament source 11. The printing arrangement 1 further comprises a first heating means 15a for heating the filament to a target filament temperature. The printing arrangement 1 further comprises a printing head 11 adapted to deposit, during use, the heated filament into the printing chamber 10 in accordance with a 3D object model stored in a memory module 16. The printing arrangement 1 further comprises a first humidity sensor 17 adapted to measure the humidity in the printing chamber 10. The printing arrangement 1 further comprises first humidity adjustment means 30 adapted to enable adjustment of the humidity in the printing chamber 10 to a target printing chamber humidity.

The printing arrangement 1 may according to one embodiment further comprise a second temperature sensor 14b adapted to measure a temperature of the printing chamber 10 and second heating means 15b adapted to heat the printing chamber to a target printing chamber temperature.

The printing arrangement 1 may further comprise a second humidity sensor 22 adapted to measure the humidity in the filament chamber 20, and second humidity adjustment means adapted to adjust humidity in the filament chamber 20 to a target chamber humidity. The first and second humidity adjustment means may be the same as shown in Fig. 1 and may be a dehumidifier fluidly connected to the printing chamber 10 and the filament chamber 20 by means of conduits 41, 42, 43, 44.

The dehumidifier 30 may comprise a dehumidifier unit 31 by which moisture in air entering the dehumidifier is removed, thus reducing the humidity.

The dehumidifier 30 is fluidly connected to the printing chamber 10 via an inlet conduit 41 extending between a dehumidifier outlet 321 and a printing chamber inlet 131, and via an outlet conduit 42 extending between a printing chamber outlet 132 and a dehumidifier inlet 322. Thus, an air flow loop is formed between the dehumidifier 30 and the printing chamber 10.

The dehumidifier 30 is fluidly connected to the filament chamber 10 via an inlet conduit 43 extending between a dehumidifier outlet 311 and a filament chamber inlet 211, and via an outlet conduit 44 extending between a filament chamber outlet 213 and a dehumidifier inlet 313. Thus, an air flow loop is formed between the dehumidifier 30 and the filament chamber 10.

The printing chamber 1 may further comprise a pressure sensor 18 adapted to measure the pressure in the printing chamber 10. The printing chamber 1 may further comprise pressure control means adapted to control the pressure in the printing chamber 10 to a target printing chamber pressure.

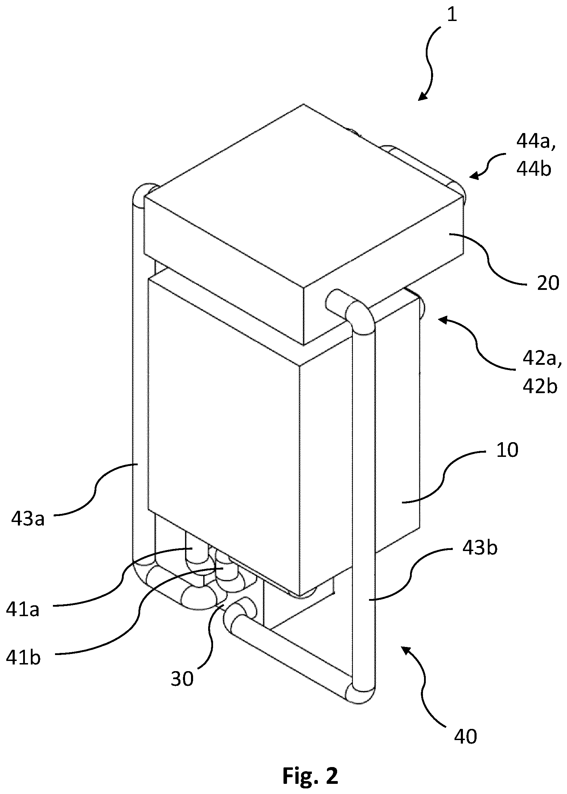

Fig. 2 shows a perspective view of the printing arrangement 1 according to one embodiment. The printing chamber 1 comprises a printing chamber 10, a filament chamber 20, and a dehumidifier 30. The dehumidifier 30 is fluidly connected to both the printing chamber 10 and the filament chamber 20 by means of two separate air flow loops defined by the conduits 41a, 41b, 42a, 42b and the conduits 43a, 43b, 44a, 44b respectively.

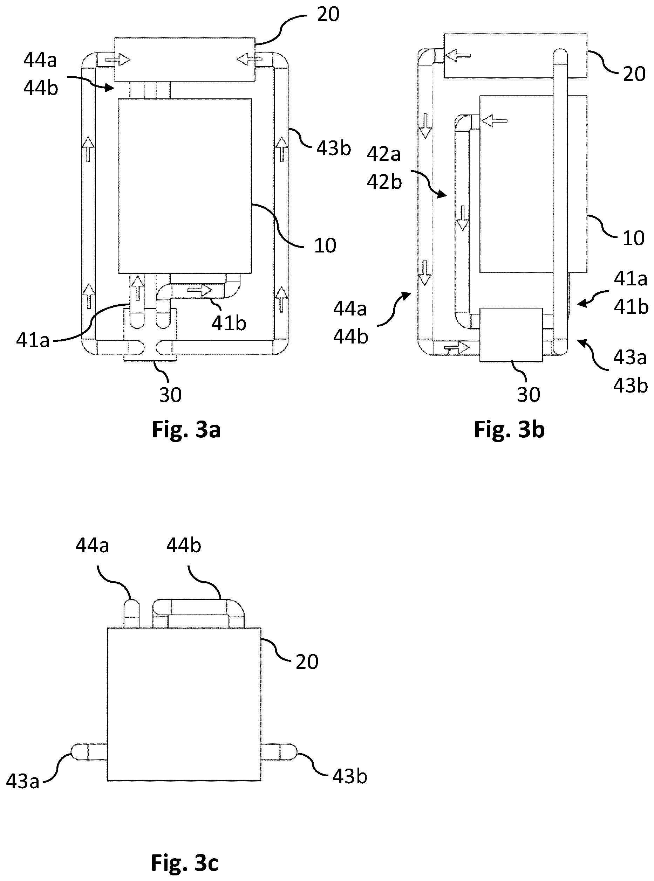

Figs. 3a-3c show the printing arrangement 1 from a plurality of side views. Fig. 3a shows a front side view of the printing arrangement 1. Fig. 3b show a left side view (left side as seen in Fig. 3a). Fig. 3c show a top view.

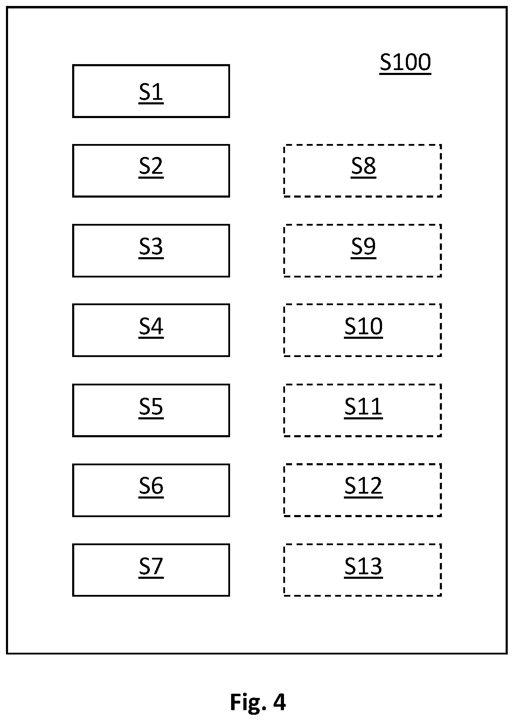

Fig. 4 shows an illustration of the steps of the method S100 according to one embodiment of the invention. The method S100 comprises the step of receiving S1, in memory module, a 3D model of an object to be printed. The method S100 further comprises the step of providing S2 a printing chamber 10 that, during use, is hermetically sealed. The method S100 further comprises the step of measuring S3, by means of a first temperature sensor, a temperature of a filament from a filament source. The method S100 further comprises a step of heating S4, by means of a first heating means, the filament to a target filament temperature. The method S100 further comprises a step of depositing S5, by means of a printing head, the filament heated to the target temperature into the printing chamber 10 in accordance with said 3D model. The method S100 further comprises a step of measuring S6, by means of a first humidity sensor, the humidity in the printing chamber 10. The method S100 further comprises a step of controlling S7, by means of a first humidity adjustment means 30, the humidity in the printing chamber 10 to a target printing chamber humidity.

The method S100 may also comprise a step of measuring S8, by means of a second temperature sensor, a temperature of the printing chamber 10. The method S100 may further comprise a step of heating S9, by means of second heating means, the printing chamber 10 to a target printing chamber temperature.

The method S100 may also comprise a step of measuring S10, by means of a second humidity sensor, the humidity in the filament chamber 20. The method S100 may also comprise a step of controlling S11, by means of a second humidity adjustment means, the humidity in the filament chamber 20 to a target filament chamber humidity.

The first and second humidity adjustment means may be the same. The humidity adjustment means may be a dehumidifier.

The method S100 may further comprise a step of measuring S12, by means of a pressure sensor, the pressure in the printing chamber 10. The method S100 may further comprise a step of controlling S13 the pressure in the printing chamber 10 to a target printing chamber pressure.

The target printing chamber humidity may be controlled to be within 0%-15%, preferably within 0%-10%, more preferably within 0% - 5%.

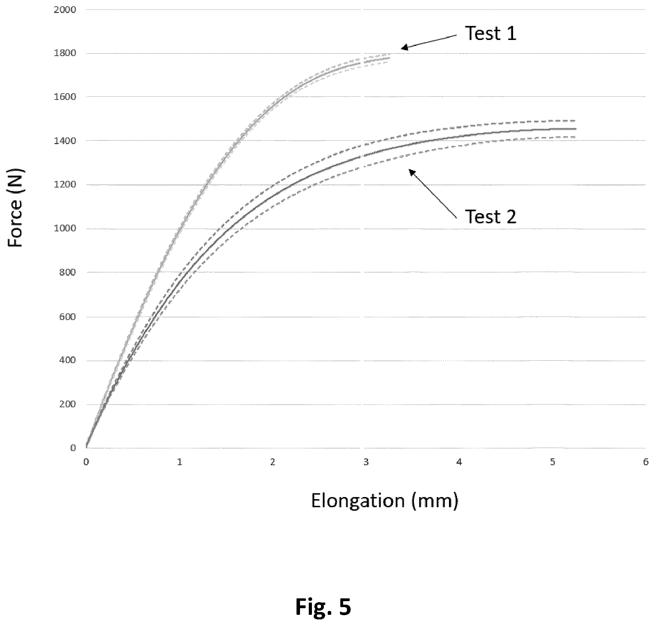

Fig. 5 illustrates absolute tensile strength of objects printed by means of the present invention (Test 1) and absolute tensile strength of objects printed by means of a conventional solution (Test 2). The absolute tensile strength measurements for Test 1 and Test 2 for various elongations, specifically 1 mm, 2 mm, 3 mm, are reproduced in table 1 below. The increase in absolute tensile strength in Test 1 as compared to Test 2 is also shown in table 1 and was about +32% to +35% depending on the elongation. This shows that objects printed by the present invention have improved quality.

**Table 1: Absolute tensile strength measurements for Test 1 and Test 2 for various elongations.**

| Elongation (mm) | Test 1 - Absolute tensile strength (N) | Test 2 - Absolute tensile strength (N) | Increase (%) |
|---|---|---|---|
| 1 | 1000 | 750 | +33.3% |
| 2 | 1550 | 1150 | +34.7% |
| 3 | 1760 | 1330 | +32.3% |

In Fig. 5, the mean standard deviations for Test 1 and Test 2 are indicated by dashed lines. The mean standard deviation for test 1 is about 1%. The mean standard deviation for test 2 is about 4%. This further illustrates that there is a significant reduced variance in absolute tensile strength for objects printed by the present invention.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A printing arrangement (1) for printing an object, the printing arrangement (1) comprising
- a printing chamber (10), **characterised in that** the printing chamber (10) is adapted to provide, during use, a hermetically sealed environment; the printing arrangement (1) further comprises
- a first temperature sensor (14a) adapted to measure a temperature of a filament from a filament source (11);
- first heating means (15a) for heating the filament to a target filament temperature;
- a printing head adapted to deposit, during use, the heated filament into the printing chamber (10) in accordance with a 3D object model stored in a memory module (16),
- a first humidity sensor (17) adapted to measure the humidity in the printing chamber (10), and
- first humidity adjustment means (30) adapted to enable adjustment of the humidity in the printing chamber (10) to a target printing chamber humidity.

2. The printing arrangement (1) according to claim 1, further comprising:
- a second temperature sensor (14b) adapted to measure a temperature of the printing chamber (10), and
- second heating means (15b) adapted to heat the printing chamber to a target printing chamber temperature.

3. The printing arrangement (1) according to any of claims 1-2, further comprising a filament chamber (20) for housing the filament source.

4. The printing arrangement (1) according to claim 3, further comprising
- a second humidity sensor (22) adapted to measure the humidity in the filament chamber (20), and
- second humidity adjustment means adapted to adjust humidity in the filament chamber (20) to a target filament chamber humidity,
- wherein, optionally, the first (30) and second humidity adjustment means are the same.

5. The printing arrangement (1) according to any preceding claims, wherein the first and/or second humidity adjustment means is a dehumidifier (30).

6. The printing arrangement (1) according to any preceding claims, further comprising:
- a pressure sensor (18) adapted to measure the pressure in the printing chamber (10), and
- pressure control means adapted to control the pressure in the printing chamber (10) to a target printing chamber pressure.

7. The printing arrangement (1) according to any preceding claims, wherein the printing chamber is heat insulated.

8. The printing arrangement (1) according to any preceding claims, wherein the printing arrangement comprises spot heating means to allow spot heating of a structure of an object being printed in the printing chamber, wherein optionally the spot heating means is a light emitting device configured to emit light, or laser, with an intensity, at a location where heated filament is to be deposited, and optionally the second temperature sensor is adapted to measure spot temperature.

9. The printing arrangement (1) according to any preceding claims, wherein the first heating means provides two heating locations, wherein a filament is heated in a predetermined manner at the first heating location after which a filament temperature is measured and the filament is then heated accordingly at the second heating location to reach the target filament temperature.

10. A method (S100) for printing an object, comprising the steps of:
- receiving (S1), in memory module, a 3D model of said object;
- providing (S2) a printing chamber (10) that, during use, is hermetically sealed;
- measuring (S3), by means of a first temperature sensor, a temperature of a filament from a filament source;
- heating (S4), by means of a first heating means, the filament to a target filament temperature;
- depositing (S5), by means of a printing head, the filament heated to the target temperature into the printing chamber (10) in accordance with said 3D model,
- measuring (S6), by means of a first humidity sensor, the humidity in the printing chamber (10), and
- controlling (S7), by means of a first humidity adjustment means (30), the humidity in the printing chamber (10) to a target printing chamber humidity,
- wherein the target printing chamber humidity is 0% - 15%.

11. The method according to claim 10, further comprising the steps of
- measuring (S8), by means of a second temperature sensor, a temperature of the printing chamber (10), and
- heating (S9), by means of second heating means, the printing chamber (10) to a target printing chamber temperature.

12. The method according to any of claims 10-11, further comprising the steps of
- measuring (S10), by means of a second humidity sensor, the humidity in a filament chamber (20) for housing the filament source, and
- controlling (S11), by means of a second humidity adjustment means, the humidity in the filament chamber (20) to a target filament chamber humidity,
- wherein, optionally, the first (30) and second humidity adjustment means are the same.

13. The method according to claim 12, wherein the first and/ or second humidity adjustment means is a dehumidifier (30).

14. The method according to any of claims 10-13, further comprising the steps of
- measuring (S12), by means of a pressure sensor, the pressure in the printing chamber (10), and
- controlling (S13) the pressure in the printing chamber (10) to a target printing chamber pressure.

15. The method according to any of claims 10-14, further comprising the step of using a printing arrangement according to any of claims 1-9 during printing.

## Patentansprüche

1. Druckanordnung (1) zum Drucken eines Objekts, wobei die Druckanordnung (1) Folgendes umfasst
- eine Druckkammer (10), **dadurch gekennzeichnet, dass** die Druckkammer (10) dazu ausgelegt ist, während eines Gebrauchs eine hermetisch abgedichtete Umgebung bereitzustellen; wobei die Druckanordnung (1) ferner Folgendes umfasst
- einen ersten Temperatursensor (14a), der dazu ausgelegt ist, eine Temperatur eines Filaments aus einer Filamentquelle (11) zu messen;
- ein erstes Erwärmungsmittel (15a) zum Erwärmen des Filaments auf eine Filamentzieltemperatur;
- einen Druckkopf, der dazu ausgelegt ist, während eines Gebrauchs das erwärmte Filament gemäß einem in einem Speichermodul (16) gespeicherten 3D-Objektmodell in die Druckkammer (10) abzuscheiden,
- einen ersten Feuchtigkeitssensor (17), der dazu ausgelegt ist, die Feuchtigkeit in der Druckkammer (10) zu messen, und
- ein erstes Feuchtigkeitseinstellmittel (30), das dazu ausgelegt ist, eine Einstellung der Feuchtigkeit in der Druckkammer (10) auf eine Druckkammerzielfeuchtigkeit zu ermöglichen.

2. Druckanordnung (1) nach Anspruch 1, die ferner Folgendes umfasst:
- einen zweiten Temperatursensor (14b), der dazu ausgelegt ist, eine Temperatur der Druckkammer (10) zu messen, und
- ein zweites Erwärmungsmittel (15b), das dazu ausgelegt ist, die Druckkammer auf eine Druckkammerzieltemperatur zu erwärmen.

3. Druckanordnung (1) nach einem der Ansprüche 1-2, die ferner eine Filamentkammer (20) zum Aufnehmen der Filamentquelle umfasst.

4. Druckanordnung (1) nach Anspruch 3, die ferner Folgendes umfasst
- einen zweiten Feuchtigkeitssensor (22), der dazu ausgelegt ist, die Feuchtigkeit in der Filamentkammer (20) zu messen, und
- ein zweites Feuchtigkeitseinstellmittel, das dazu ausgelegt ist, die Feuchtigkeit in der Filamentkammer (20) auf eine Filamentkammerzielfeuchtigkeit einzustellen,
- wobei optional das erste (30) und das zweite Feuchtigkeitseinstellmittel dasselbe sind.

5. Druckanordnung (1) nach einem der vorhergehenden Ansprüche, wobei das erste und/oder das zweite Feuchtigkeitseinstellmittel ein Entfeuchter (30) ist.

6. Druckanordnung (1) nach einem der vorhergehenden Ansprüche, die ferner Folgendes umfasst:
- einen Drucksensor (18), der dazu ausgelegt ist, den Druck in der Druckkammer (10) zu messen, und
- ein Drucksteuerungsmittel, das dazu ausgelegt ist, den Druck in der Druckkammer (10) auf einen Druckkammerzieldruck zu steuern.

7. Druckanordnung (1) nach einem der vorhergehenden Ansprüche, wobei die Druckkammer wärmeisoliert ist.

8. Druckanordnung (1) nach einem der vorhergehenden Ansprüche, wobei die Druckanordnung ein Punkterwärmungsmittel umfasst, um eine Punkterwärmung einer Struktur eines Objekts, das in der Druckkammer gedruckt wird, zu ermöglichen, wobei optional das Punkterwärmungsmittel eine Lichtemissionsvorrichtung ist, die dazu ausgestaltet ist, Licht oder Laser mit einer Intensität an einer Stelle zu emittieren, an der erwärmtes Filament abgeschieden werden soll, und wobei optional der zweite Temperatursensor dazu ausgelegt ist, eine Punkttemperatur zu messen.

9. Druckanordnung (1) nach einem der vorhergehenden Ansprüche, wobei das erste Erwärmungsmittel zwei Erwärmungsstellen bereitstellt, wobei ein Filament an der ersten Erwärmungsstelle in einer vorbestimmten Weise erwärmt wird, wobei anschließend eine Filamenttemperatur gemessen wird und das Filament dann an der zweiten Erwärmungsstelle entsprechend erwärmt wird, um die Filamentzieltemperatur zu erreichen.

10. Verfahren (S100) zum Drucken eines Objekts, das die folgenden Schritte umfasst:
- Empfangen (S1), in einem Speichermodul, eines 3D-Modells des Objekts;
- Bereitstellen (S2) einer Druckkammer (10), die während eines Gebrauchs hermetisch abgedichtet ist;
- Messen (S3), mittels eines ersten Temperatursensors, einer Temperatur eines Filaments aus einer Filamentquelle;
- Erwärmen (S4), mittels eines ersten Erwärmungsmittels, des Filaments auf eine Filamentzieltemperatur;
- Abscheiden (S5), mittels eines Druckkopfes, des auf die Zieltemperatur erwärmten Filaments in die Druckkammer (10) gemäß dem 3D-Modell,
- Messen (S6), mittels eines ersten Feuchtigkeitssensors, der Feuchtigkeit in der Druckkammer (10), und
- Steuern (S7), mittels eines ersten Feuchtigkeitseinstellmittels (30), der Feuchtigkeit in der Druckkammer (10) auf eine Druckkammerzielfeuchtigkeit,
- wobei die Druckkammerzielfeuchtigkeit 0 %-15 % beträgt.

11. Verfahren nach Anspruch 10, das ferner die folgenden Schritte umfasst
- Messen (S8), mittels eines zweiten Temperatursensors, einer Temperatur der Druckkammer (10), und
- Erwärmen (S9), mittels eines zweiten Erwärmungsmittels, der Druckkammer (10) auf eine Druckkammerzieltemperatur.

12. Verfahren nach einem der Ansprüche 10-11, das ferner die folgenden Schritte umfasst
- Messen (S10), mittels eines zweiten Feuchtigkeitssensors, der Feuchtigkeit in einer Filamentkammer (20) zur Aufnahme der Filamentquelle, und
- Steuern (S11), mittels eines zweiten Feuchtigkeitseinstellmittels, der Feuchtigkeit in der Filamentkammer (20) auf eine Filamentkammerzielfeuchtigkeit,
- wobei optional das erste (30) und das zweite Feuchtigkeitseinstellmittel dasselbe sind.

13. Verfahren nach Anspruch 12, wobei das erste und/oder das zweite Feuchtigkeitseinstellmittel ein Entfeuchter (30) ist.

14. Verfahren nach einem der Ansprüche 10-13, das ferner die folgenden Schritte umfasst
- Messen (S12), mittels eines Drucksensors, des Drucks in der Druckkammer (10), und
- Steuern (S13) des Drucks in der Druckkammer (10) auf einen Druckkammerzieldruck.

15. Verfahren nach einem der Ansprüche 10-14, das ferner den Schritt Verwenden einer Druckanordnung nach einem der Ansprüche 1-9 während eines Druckens umfasst.

## Revendications

1. Agencement d'impression (1) pour imprimer un objet, l'agencement d'impression (1) comprenant
- une chambre d'impression (10), **caractérisée en ce que** la chambre d'impression (10) est adaptée pour fournir, en cours d'utilisation, un environnement fermé hermétiquement ; l'agencement d'impression (1) comprenant en outre
- un premier capteur de température (14a) adapté pour mesurer une température d'un filament à partir d'une source de filament (11) ;
- un premier moyen de chauffage (15a) pour chauffer le filament à une température de filament cible,
- une tête d'impression adaptée pour déposer, en cours d'utilisation, le filament chauffé dans la chambre d'impression (10) selon un modèle d'objet 3D stocké dans un module de mémoire (16),
- un premier capteur d'humidité (17) adapté pour mesurer l'humidité dans la chambre d'impression (10), et
- un premier moyen de réglage d'humidité (30) adapté pour permettre le réglage de l'humidité dans la chambre d'impression (10) sur une humidité de chambre d'impression cible.

2. Agencement d'impression (1) selon la revendication 1, comprenant en outre :
- un second capteur de température (14b) adapté pour mesurer une température de la chambre d'impression (10), et
- un second moyen de chauffage (15b) adapté pour chauffer la chambre d'impression à une température de chambre d'impression cible.

3. Agencement d'impression (1) selon l'une quelconque des revendications 1 à 2, comprenant en outre une chambre de filament (20) pour loger la source de filament.

4. Agencement d'impression (1) selon la revendication 3, comprenant en outre
- un second capteur d'humidité (22) adapté pour mesurer l'humidité dans la chambre de filament (20), et
- un second moyen de réglage d'humidité adapté pour régler l'humidité dans la chambre de filament (20) sur une humidité de chambre de filament cible,
- dans lequel, facultativement, les premier (30) et second moyens de réglage d'humidité sont identiques.

5. Agencement d'impression (1) selon l'une quelconque des revendications précédentes, dans lequel le premier et/ou le second moyen de réglage d'humidité est un déshumidificateur (30).

6. Agencement d'impression (1) selon l'une quelconque des revendications précédentes, comprenant en outre :
- un capteur de pression (18) adapté pour mesurer la pression dans la chambre d'impression (10), et
- un moyen de commande de pression adapté pour commander la pression dans la chambre d'impression (10) sur une pression de chambre d'impression cible.

7. Agencement d'impression (1) selon l'une quelconque des revendications précédentes, dans lequel la chambre d'impression est isolée thermiquement.

8. Agencement d'impression (1) selon l'une quelconque des revendications précédentes, dans lequel l'agencement d'impression comprend un moyen de chauffage ponctuel pour permettre un chauffage ponctuel d'une structure d'un objet imprimé dans la chambre d'impression, dans lequel facultativement le moyen de chauffage ponctuel est un dispositif émetteur de lumière configuré pour émettre de la lumière, ou un laser, avec une intensité, au niveau d'un emplacement où le filament chauffé doit être déposé, et facultativement le second capteur de température est adapté pour mesurer la température ponctuelle.

9. Agencement d'impression (1) selon l'une quelconque des revendications précédentes, dans lequel le premier moyen de chauffage fournit deux emplacements de chauffage, dans lequel un filament est chauffé d'une manière prédéterminée au niveau du premier emplacement de chauffage après quoi une température de filament est mesurée et le filament est ensuite chauffé en conséquence au niveau du second emplacement de chauffage pour atteindre la température de filament cible.

10. Procédé (S100) d'impression d'un objet, comprenant les étapes suivantes :
- la réception (S1), dans un module de mémoire, d'un modèle 3D dudit objet ;
- la fourniture (S2) d'une chambre d'impression (10) qui, en cours d'utilisation, est fermée hermétiquement ;
- la mesure (S3), au moyen d'un premier capteur de température, d'une température d'un filament à partir d'une source de filament ;
- le chauffage (S4), au moyen d'un premier moyen de chauffage, du filament à une température de filament cible ;
- le dépôt (S5), au moyen d'une tête d'impression, du filament chauffé à la température cible dans la chambre d'impression (10) en fonction dudit modèle 3D,
- la mesure (S6), au moyen d'un premier capteur d'humidité, de l'humidité dans la chambre d'impression (10), et
- la commande (S7), au moyen d'un premier moyen de réglage d'humidité (30), de l'humidité dans la chambre d'impression (10) à une humidité de chambre d'impression cible,
- dans lequel l'humidité de chambre d'impression cible est de 0 à 15 %.

11. Procédé selon la revendication 10, comprenant en outre les étapes suivantes :
- la mesure (S8), au moyen d'un second capteur de température, d'une température de la chambre d'impression (10), et
- le chauffage (S9), au moyen d'un second moyen de chauffage, de la chambre d'impression (10) à une température de chambre d'impression cible.

12. Procédé selon l'une quelconque des revendications 10 à 11, comprenant en outre les étapes suivantes :
- la mesure (S10), au moyen d'un second capteur d'humidité, de l'humidité dans une chambre de filament (20) destinée à loger la source de filament, et
- la commande (S11), au moyen d'un second moyen de réglage d'humidité, de l'humidité dans la chambre de filament (20) à une humidité de chambre de filament cible,
- dans lequel, facultativement, les premier (30) et second moyens de réglage d'humidité sont identiques.

13. Procédé selon la revendication 12, dans lequel le premier et/ou le second moyen de réglage d'humidité est un déshumidificateur (30).

14. Procédé selon l'une quelconque des revendications 10 à 13, comprenant en outre les étapes suivantes :
- la mesure (S12), au moyen d'un premier capteur de pression, de la pression dans la chambre d'impression (10), et
- la commande (S13) de la pression dans la chambre d'impression (10) sur une pression de chambre d'impression cible.

15. Procédé selon l'une quelconque des revendications 10 à 14, comprenant en outre l'étape d'utilisation d'un agencement d'impression selon l'une quelconque des revendications 1 à 9 pendant l'impression.
